# FASCICULE DE BREVET EUROPEEN

(11) **EP 1 640 564 B1**
(45) Date de publication et mention de la délivrance du brevet: **15.04.2020**
(21) Numéro de dépôt: 05291888.5
(22) Date de dépôt: 13.09.2005
(51) Int. Cl.: F01D 21/02, F01D 21/04

(54) **Dispositif de limitation de survitesse de turbine**
Überdrehzahlsicherung einer Turbine
Turbine overspeed limiting device

(30) Priorité: 28.09.2004 FR 0410229
(43) Date de publication de la demande: 29.03.2006
(73) Titulaire: Safran Aircraft Engines, 75015 Paris (FR)
(72) Inventeur: Soupizon, Jean-Luc, 77530 Vaux Le Penil (FR)
(74) Mandataire: Pichat, Thierry

(56) Documents cités:
- GB-A- 2 128 686
- US-A- 2 966 333
- US-A- 3 989 407
- US-A- 4 498 291
- US-A- 4 505 104

## Description

La présente invention concerne un dispositif de limitation de survitesse de turbine dans une turbomachine telle qu'un turboréacteur, dans le cas d'une rupture de l'arbre de turbine.

Une rupture de l'arbre de turbine d'une turbomachine, heureusement très peu fréquente en pratique, peut être due à un mauvais montage ou à une mauvaise protection de l'arbre contre l'oxydation.

A la rupture de cet arbre, qui relie le rotor de la turbine à la soufflante de la turbomachine, les aubes mobiles de la turbine sont toujours entraînées en rotation par les gaz sortant de la chambre de combustion de la turbomachine mais sont désolidarisées de la soufflante qui limitait leur vitesse de rotation. La turbine s'emballe alors et passe en « survitesse », ce qui soumet les aubes mobiles à des contraintes excessives pouvant provoquer l'éclatement du rotor avec des risques de perforation du carter externe de la turbine et de perforation de la carlingue de l'avion équipé de cette turbomachine. La limitation de survitesse est donc une contrainte majeure à respecter sur les turbomachines.

Les dispositifs connus de limitation de survitesse utilisent en général le déplacement vers l'aval du rotor de la turbine qui résulte de la rupture de l'arbre de turbine et de la pression des gaz sur les aubes du rotor.

On a déjà proposé des dispositifs de freinage mécanique du rotor de la turbine, comprenant des moyens portés par le rotor et destinés à venir en appui sur des moyens correspondants du stator de manière à freiner le rotor, suite à son déplacement vers l'aval après la rupture de l'arbre de turbine.

Ces dispositifs ont l'inconvénient d'être relativement lents, ce qui nuit à leur efficacité.

On a également proposé dans le document US4505104 et dans le document GB-A-2 128 686 de monter des aubes directrices du stator de façon amovible ou basculante pour que le rotor, lors de son déplacement vers l'aval après la rupture de l'arbre de turbine, vienne s'appuyer sur ces aubes et les fasse basculer sur la trajectoire des aubes mobiles pour les détruire et ainsi ralentir la rotation de la turbine. Cette solution connue est toutefois complexe et coûteuse. Il faut aussi prévoir des moyens interdisant le basculement de ces aubes directrices pour des causes autres que la rupture de l'arbre de turbine.

En outre, les dispositifs connus ont en général l'inconvénient d'augmenter la masse totale de la turbine et de modifier le profil aérodynamique de ses composants.

L'invention a notamment pour but d'apporter une solution simple, économique et efficace à ces problèmes et d'éviter les inconvénients de la technique connue.

L'invention a aussi pour but de répondre de façon plus satisfaisante aux exigences de fiabilité et de rapidité d'un dispositif de limitation de survitesse d'une turbine dans une turbomachine.

Elle propose à cet effet une turbine de turbomachine, la turbine comprenant un rotor formé de disques montés sur un arbre de turbine et portant des aubes mobiles, des étages d'aubes fixes disposés entre les disques du rotor, et un dispositif de limitation de survitesse comportant des moyens de destruction desdites aubes mobiles des disques du rotor, en cas de rupture de l'arbre de turbine, les moyens de destruction étant portés par un étage d'aubes fixes situé entre le disque amont du rotor et le disque suivant dudit rotor, caractérisée en ce que les moyens de destruction sont fixes, portés par une extrémité radialement interne de l'étage d'aubes fixes et sont destinés à cisailler les aubes mobiles du disque amont du rotor au début d'un déplacement vers l'aval du rotor résultant de la rupture de l'arbre de turbine.

Les aubes détruites sont projetées sur les autres aubes du rotor et sur celles du stator de la turbine et provoquent leur destruction, ce qui empêche le rotor de partir en survitesse, les aubes détruites ne lui fournissant plus d'énergie mécanique.

Le dispositif selon l'invention formé par un étage d'aubes fixes de la turbine ne modifie pas l'écoulement des gaz dans la turbine et ne réduit pas le rendement de la turbomachine.

Les moyens de cisaillement du dispositif selon l'invention sont fixes, et donc plus faciles à réaliser et à mettre en œuvre que dans la technique connue.

Dans un mode de réalisation préféré de l'invention, les moyens de cisaillement sont portés ou formés par un rebord circonférentiel amont de l'étage d'aubes fixes et sont destinés à agir sur des parties minces ou « échasses » des aubes mobiles, adjacentes aux pieds d'aubes.

L'échasse d'une aube mobile est en général la partie la plus fragile de l'aube. Le dispositif selon l'invention profite donc de la relative fragilité de cette partie de l'aube pour la détruire le plus rapidement possible en cas de rupture de l'arbre de turbine.

Les moyens de cisaillement ont préférentiellement une dimension axiale en saillie vers l'amont égale à au moins une fraction de la dimension axiale des parties minces à cisailler des aubes mobiles.

Cette dimension axiale des moyens de cisaillement doit être suffisante pour que la partie non coupée ou non détruite des aubes mobiles soit soumise à une contrainte au moins égale à sa limite de résistance à la rupture.

Dans un mode de réalisation préféré de l'invention, les moyens de cisaillement comprennent une pluralité d'éléments en dents de scie répartis sur la circonférence du rebord précité de l'étage d'aubes fixes.

Les moyens de cisaillement sont avantageusement formés d'une seule pièce avec un ou plusieurs secteurs annulaires de l'étage d'aubes fixes. Ils peuvent être réalisés en même temps que les aubes fixes, ce qui réduit significativement le coût du dispositif selon l'invention par rapport à la technique antérieure.

Les moyens de cisaillement sont avantageusement réalisés en un matériau de dureté supérieure à celle des aubes mobiles à détruire. Ils peuvent en outre être recouverts au moins partiellement d'un matériau abrasif, ce qui permet d'user plus rapidement et plus efficacement les parties à détruire des aubes mobiles.

Le dispositif selon l'invention est particulièrement mais non exclusivement destiné à la limitation de survitesse d'une turbine basse-pression dans un turboréacteur.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'une turbine basse-pression de turboréacteur équipée du dispositif selon l'invention ;
- la figure 2 est une vue schématique partielle en coupe axiale de la turbine de la figure 1 dans laquelle l'arbre de la turbine est cassé ;
- la figure 3 est une vue schématique agrandie d'une partie de la figure 1 illustrant le dispositif de limitation de survitesse de la turbine selon l'invention ;
- la figure 4 est une vue en coupe selon la ligne IV-IV de la figure 3 ;
- la figure 5 est une vue en coupe selon la ligne V-V de la figure 3 ;
- la figure 6 est une vue schématique en coupe axiale du dispositif selon l'invention, illustrant le début du cisaillement des aubes mobiles du disque amont ;
- la figure 7 est une vue correspondant à la figure 6, illustrant la destruction des aubes mobiles du disque amont.

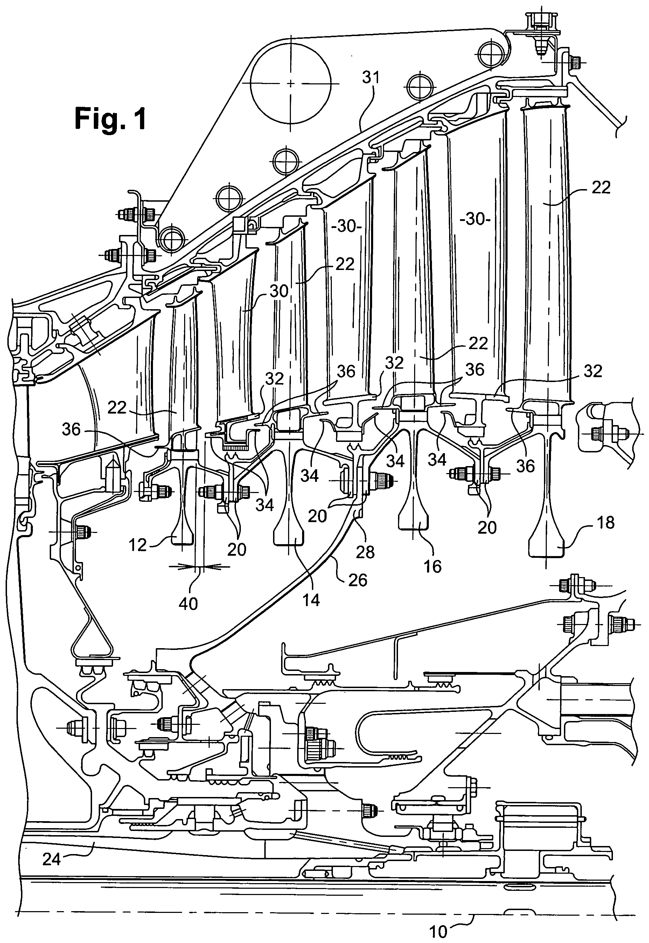

On se réfère d'abord à la figure 1 qui est une demie vue schématique en coupe d'une turbine basse-pression de turboréacteur, selon un plan passant par l'axe 10 de rotation du rotor de la turbine.

Le rotor de la turbine basse-pression comprend quatre disques 12, 14, 16, 18 assemblés axialement les uns aux autres par des brides annulaires 20 et portant des aubes 22 individuelles qui sont montées par des pieds d'aube, par exemple en queue d'aronde ou analogue, à leur extrémité radialement interne sur la périphérie extérieure des disques 12, 14, 16, 18. Le rotor est relié à l'arbre de turbine 24 par l'intermédiaire d'un cône d'entraînement 26 fixé au moyen d'une bride annulaire 28 entre les brides annulaires 20 des disques 14 et 16 du rotor de la turbine basse-pression.

Entre les étages d'aubes mobiles 22 se trouvent des étages d'aubes fixes 30 qui sont montées par des moyens appropriés à leurs extrémités radialement externes sur un carter 31 de la turbine basse-pression. Les aubes fixes 30 sont réunies entre elles à leurs extrémités radialement internes par des secteurs annulaires 32 placés bout à bout sur une circonférence.

Des becquets ou rebords circonférentiels 34 amont et aval sont formés en saillie axiale sur les secteurs annulaires 32. Ces rebords 34 constituent des chicanes avec d'autres becquets ou rebords circonférentiels 36 amont et aval des plates-formes des aubes 22 des disques 12, 14, 16, 18 de rotor, pour limiter le passage des gaz de combustion, provenant de la chambre de combustion en amont de la turbine, radialement de l'extérieur vers l'intérieur, et inversement d'air froid radialement de l'intérieur vers l'extérieur.

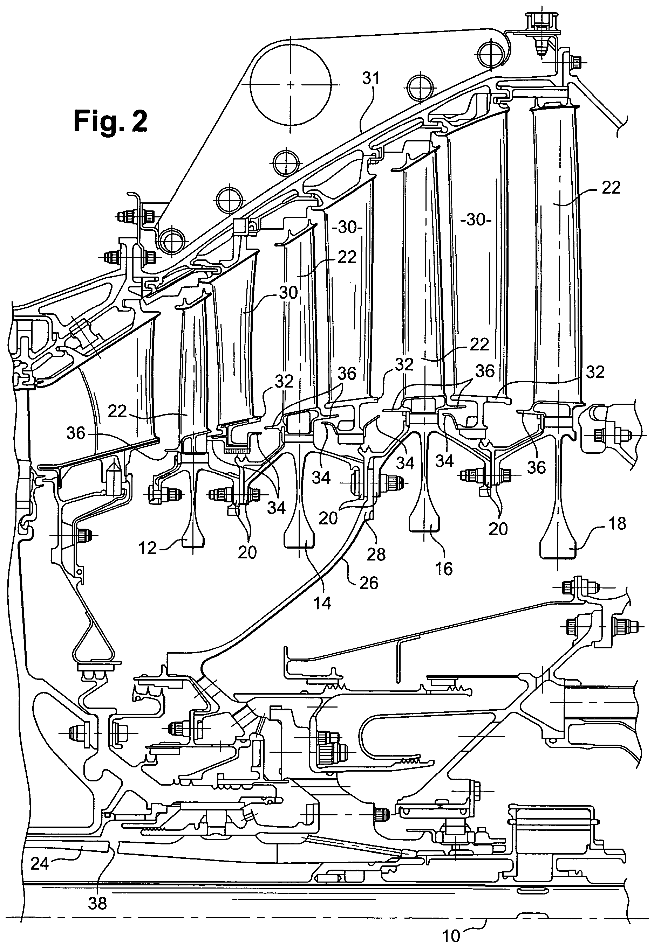

Le dispositif de limitation de survitesse de la turbine basse-pression selon l'invention est porté ou formé par le rebord amont 34 du premier étage ou étage amont d'aubes fixes 30 et sur lequel est destinée à venir buter une partie des pieds des aubes 22 du disque amont 12 au début du déplacement vers l'aval du rotor résultant de la rupture en 38 de l'arbre de turbine 24 et de la pression exercée par les gaz de combustion sur les aubes 22 des disques 12, 14, 16, 18 du rotor (figure 2).

Le jeu axial 40 (figure 1) entre le rebord amont 34 du premier étage d'aubes fixes 30 et la partie précitée des pieds des aubes 22 du premier disque 12 est inférieur aux jeux axiaux entre les autres disques 14, 16, 18 du rotor et les autres étages d'aubes fixes 30 de sorte que le contact ou l'interférence entre le rotor et le stator a lieu d'abord entre ce rebord 34 et la partie précitée des pieds des aubes 22 lors du déplacement vers l'aval du rotor de la turbine à la rupture de l'arbre 24.

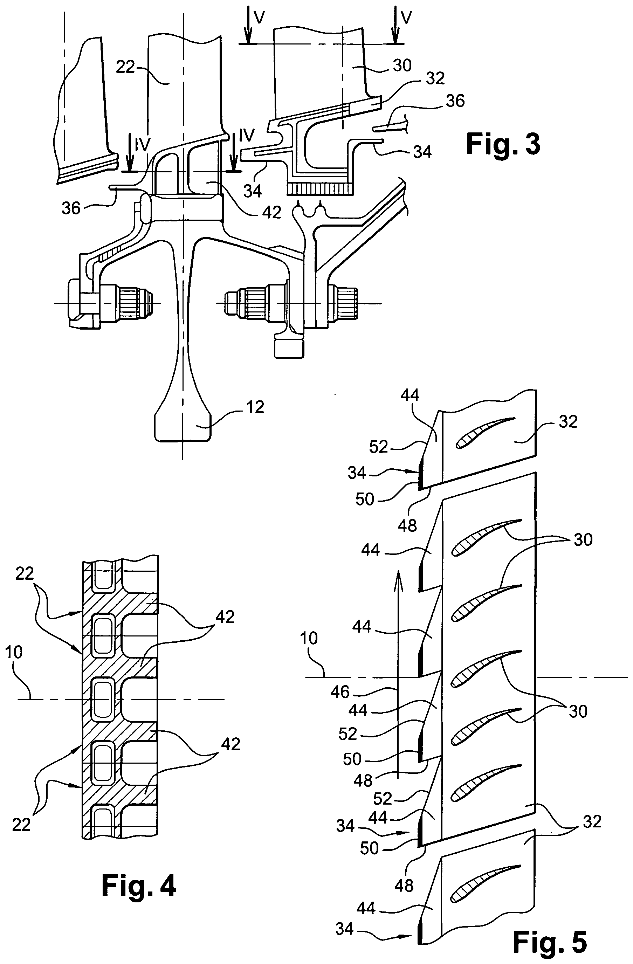

Comme on le voit mieux aux figure 3 et 4, les parties des aubes comprises entre les plates-formes et les pieds d'aube comportent des nervures radiales ou échasses 42 du côté aval, qui font typiquement quelques millimètres d'épaisseur et qui se trouvent en direction radiale au niveau du rebord circonférentiel amont 34 du premier étage d'aubes fixes. Ce rebord 34 forme des moyens de cisaillement des échasses 42 des aubes mobiles 22 du premier étage, en cas de rupture de l'arbre 24, et il peut être renforcé à cette fin si nécessaire. Sa longueur axiale en saillie vers l'amont doit permettre de couper une partie suffisante des échasses 42 pour que la contrainte dans la partie restante des échasses 42 soit au moins égale ou supérieure à la limite de résistance à la rupture du matériau des aubes 22, afin d'assurer la rupture de ces aubes.

Le rebord 34, obtenu de fonderie, peut être surdimensionné en épaisseur pour avoir une résistance suffisante et il peut être usiné pour améliorer son pouvoir de coupe des échasses 42. On peut notamment déposer sur ce rebord 34 un revêtement d'une matière dure et/ou abrasive (ayant une dureté égale ou supérieure à celle de la matière des aubes mobiles 22) et on peut lui donner une forme en dents de scie, de fonderie ou par usinage, comme représenté en figure 5.

Dans cette figure, l'étage d'aubes fixes 30 comporte une juxtaposition circonférentielle de plusieurs secteurs annulaires 32 dont les rebords amont 34 sont formés avec une pluralité de dents de scie 44 dont la forme et l'orientation sont déterminées par le sens de rotation 46 des aubes mobiles 22 par rapport aux aubes fixes 30. Dans l'exemple représenté, les dents de scie 44 comprennent chacune un bord 48 sensiblement parallèle à l'axe 10 de la turbine, rattaché à un bord de coupe 50 qui s'étend en direction circonférentielle et qui est raccordé à la base de la dent suivante par un bord oblique 52.

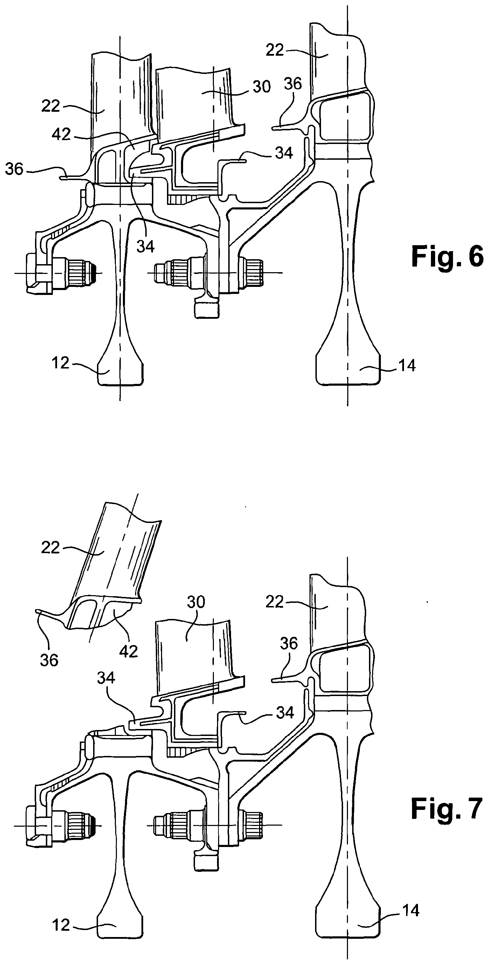

Le dispositif selon l'invention fonctionne de la façon suivante :
les échasses 42 des aubes 22 du disque amont 12 viennent buter contre le rebord amont 34 du premier étage d'aubes fixes 30, dès le début du déplacement vers l'aval du rotor de la turbine suite à la rupture de l'arbre de turbine 24. Le rotor continuant à tourner autour de l'axe 10, les moyens de cisaillement prévus sur ou formés par le rebord 34, découpent une partie des échasses 42, comme représenté en figure 6. Les aubes 22 sont alors suffisamment fragilisées pour se rompre (figure 7) sous l'effet de la pression des gaz de combustion et de la force centrifuge. Les morceaux des aubes 22 du disque amont 12 sont projetés sur les aubes fixes 30 du stator et les détruisent ainsi que les aubes fixes et mobiles des autres étages de la turbine.

La destruction du rotor de la turbine est réalisée très rapidement, typiquement dans un intervalle de temps dont l'ordre de grandeur est le dixième de seconde après la rupture de l'arbre. Cette destruction élimine tout risque de survitesse de la turbine et donc tout risque d'éclatement de la turbine et de perforation du carter de la turbine et de la carlingue de l'avion.

## Revendications

1. Turbine de turbomachine, la turbine comprenant un rotor formé de disques (12, 14, 16, 18) montés sur un arbre de turbine (24) et portant des aubes mobiles (22), des étages d'aubes fixes (30) disposés entre les disques (12, 14, 16, 18) du rotor, et un dispositif de limitation de survitesse comportant des moyens (34) de destruction desdites aubes mobiles (22) des disques du rotor, en cas de rupture de l'arbre de turbine (24), les moyens de destruction étant portés par un étage d'aubes fixes (30) situé entre le disque amont (12) du rotor et le disque suivant (14) dudit rotor, **caractérisée en ce que** les moyens (34) de destruction sont fixes, portés par une extrémité radialement interne de l'étage d'aubes fixes (30) et sont destinés à cisailler les aubes mobiles (22) du disque amont (12) du rotor au début d'un déplacement vers l'aval du rotor résultant de la rupture de l'arbre de turbine (24).

2. Turbine selon la revendication 1, **caractérisée en ce que** les moyens de cisaillement sont portés ou formés par un rebord circonférentiel amont (34) de l'étage d'aubes fixes (30).

3. Turbine selon la revendication 1 ou 2, **caractérisée en ce que** les moyens de cisaillement sont destinés à agir sur des parties minces ou échasses (42) des aubes mobiles (22), adjacentes aux pieds d'aubes.

4. Turbine selon la revendication 3, **caractérisée en ce que** les moyens de cisaillement ont une dimension axiale en saillie vers l'amont égale à au moins une fraction de la dimension axiale des parties minces à cisailler des aubes mobiles (22) et suffisante pour que la partie non détruite des aubes mobiles soit soumise à une contrainte au moins égale à sa limite de résistance à la rupture.

5. Turbine selon l'une des revendications 2 à 4, **caractérisée en ce que** les moyens de cisaillement comprennent une pluralité de dents de scie (44) réparties sur la circonférence du rebord (34).

6. Turbine selon l'une des revendications précédentes, **caractérisée en ce que** les moyens de cisaillement sont réalisés en un matériau de dureté supérieure à celle des aubes mobiles (22) à détruire.

7. Turbine selon l'une des revendications précédentes, **caractérisée en ce que** les moyens de cisaillement sont recouverts au moins partiellement d'un matériau abrasif.

8. Turbine selon l'une des revendications précédentes, **caractérisée en ce que** les moyens de cisaillement sont usinés ou de fonderie.

9. Turbine selon l'une des revendications précédentes, **caractérisée en ce que** la turbine est une turbine basse-pression d'un turboréacteur.

## Patentansprüche

1. Turbine einer Turbomaschine bzw. eines Turbotriebwerks, wobei die Turbine einen Rotor, der aus Scheiben (12, 14, 16, 18) gebildet ist, die an einer Turbinenwelle (24) angebracht sind und die bewegliche Schaufeln (22) tragen, Leitschaufelstufen (30), die zwischen den Rotorscheiben (12, 14, 16, 18) angeordnet sind, und eine Überdrehzahl-Sicherungsvorrichtung enthält, die Einrichtungen (34) für eine Zerstörung der beweglichen Schaufeln (22) der Rotorscheiben im Falle eines Bruchs der Turbinenwelle (24) enthält, wobei die Zerstörungseinrichtungen von einer Leitschaufelstufe (30) getragen werden, die zwischen der stromaufwärtigen Rotorscheibe (12) und der nächstliegenden Rotorscheibe (14) liegt, **dadurch gekennzeichnet, dass** die Zerstörungseinrichtungen (34) fest sind, von einem radial inneren Ende der Leitschaufelstufe (30) getragen werden und dazu bestimmt sind, die beweglichen Schaufeln (22) der stromaufwärtigen Rotorscheibe (12) zu Beginn einer Verlagerung in Richtung stromabwärts des Rotors, die sich aus dem Bruch der Turbinenwelle (24) ergibt, abzuscheren.

2. Turbine nach Anspruch 1, **dadurch gekennzeichnet, dass** die Schereinrichtungen von einer stromaufwärtigen Umfangsrandleiste (34) der Leitschaufelstufe (30) getragen oder gebildet werden.

3. Turbine nach Anspruch 1 oder 2, **dadurch gekennzeichnet, dass** die Schereinrichtungen dazu bestimmt sind, auf dünne bzw. schlanke Teile (42) der beweglichen Schaufeln (22), die an die Schaufelfüße angrenzen, einzuwirken.

4. Turbine nach Anspruch 3, **dadurch gekennzeichnet, dass** die Schereinrichtungen eine in Richtung stromaufwärts ragende axiale Abmessung haben, die gleich zumindest einem Bruchteil der axialen Abmessung der abzuscherenden dünnen Teile der beweglichen Schaufeln (22) ist und ausreicht, damit der nicht zerstörte Teil der beweglichen Schaufeln einer Vorspannung ausgesetzt wird, die zumindest gleich seiner Bruchfestigkeitsgrenze ist.

5. Turbine nach einem der Ansprüche 2 bis 4, **dadurch gekennzeichnet, dass** die Schereinrichtungen eine Mehrzahl von Sägezähnen (44) aufweisen, die über den Umfang der Randleiste (34) verteilt sind.

6. Turbine nach einem der vorangehenden Ansprüche, **dadurch gekennzeichnet, dass** die Schereinrichtungen aus einem Material mit höherer Härte als die der zu zerstörenden beweglichen Schaufeln (22) hergestellt sind.

7. Turbine nach einem der vorangehenden Ansprüche, **dadurch gekennzeichnet, dass** die Schereinrichtungen zumindest teilweise mit einem abrasiven Material überdeckt sind.

8. Turbine nach einem der vorangehenden Ansprüche, **dadurch gekennzeichnet, dass** die Schereinrichtungen spanend bearbeitet oder gegossen sind.

9. Turbine nach einem der vorangehenden Ansprüche, **dadurch gekennzeichnet, dass** die Turbine eine Niederdruckturbine eines Strahltriebwerks ist.

## Claims

1. A turbine of a turbomachine, the turbine comprising a rotor formed with disks (12, 14, 16, 18) mounted on a turbine shaft (24) and carrying moving blades (22), stages of fixed blades (30) disposed between the disks (12, 14, 16, 18) of the rotor, and a device for limiting over-speed comprising means (34) for destructing said moving blades (22) of the disks of the rotor, in the case of fracture of the turbine shaft (24), the means for destructing being carried by a stage of fixed blades (30) situated between the upstream disk (12) of the rotor and the following disk (14) of said rotor, **characterized in that** the means (34) for destructing are fixed, carried by a radially inner end of the stage of fixed blades (30) and are intended to shear the moving blades (22) of the upstream disk (12) of the rotor at the start of a downstream displacement of the rotor resulting from the fracture of the turbine shaft (24).

2. The turbine according to Claim 1, **characterized in that** the shearing means are carried or formed by an upstream circumferential rim (34) of the stage of fixed blades (30).

3. The turbine according to Claim 1 or 2, **characterized in that** the shearing means are intended to act on thin parts or struts (42) of the moving blades (22), adjacent to roots of the blade.

4. The turbine according to Claim 3, **characterized in that** the shearing means have an axial dimension protruding in the upstream direction equal to at least a fraction of the axial dimension of the thin parts of the moving blades (22) to be sheared and sufficient for the non-destroyed part of the moving blades to be subjected to a stress at least equal to its ultimate breaking strength.

5. The turbine according to one of Claims 2 to 4, **characterized in that** the shearing means comprise a plurality of sawteeth (44) distributed around the circumference of the said rim (34).

6. The turbine according to one of the preceding claims, **characterized in that** the shearing means are made from a material of hardness greater than that of the moving blades (22) to be destroyed.

7. The turbine according to one of the preceding claims, **characterized in that** the shearing means are covered at least partially with an abrasive material.

8. The turbine according to one of the preceding claims, **characterized in that** the shearing means are produced by machining or by casting.

9. The turbine according to one of the preceding claims, **characterized in that** the turbine is a low-pressure turbine of a turbojet.
